# EUROPEAN PATENT SPECIFICATION

(11) **EP 4 488 234 B1**
(45) Date of publication and mention of the grant of the patent: **25.02.2026**
(21) Application number: 22952728.8
(22) Date of filing: 27.09.2022
(51) Int. Cl.: C01G 53/05, C01G 53/42, C01G 53/506, H01M 4/505, H01M 4/525, H01M 10/0525

(54) **POSITIVE ELECTRODE MATERIAL PRECURSOR, PREPARATION METHOD THEREFOR, POSITIVE ELECTRODE MATERIAL, AND LITHIUM ION BATTERY**
POSITIVELEKTRODENMATERIALVORLÄUFER, HERSTELLUNGSVERFAHREN DAFÜR, POSITIVELEKTRODENMATERIAL UND LITHIUM-IONEN-BATTERIE
PRÉCURSEUR DE MATÉRIAU D'ÉLECTRODE POSITIVE, SON PROCÉDÉ DE PRÉPARATION, MATÉRIAU D'ÉLECTRODE POSITIVE ET BATTERIE LITHIUM-ION

(30) Priority: 29.07.2022 CN 202210910328
(43) Date of publication of application: 08.01.2025
(73) Proprietor: CNGR Advanced Material Co., Ltd., Tongren, Guizhou 554300 (CN)
(72) Inventor: YIN, Shuo, Changsha, Hunan 410000 (CN); TANG, Jiajun, Changsha, Hunan 410000 (CN); WANG, Yiqiao, Changsha, Hunan 410000 (CN); ZHANG, Yuying, Changsha, Hunan 410000 (CN); MU, Xiaowen, Changsha, Hunan 410000 (CN); HE, Haiyuan, Changsha, Hunan 410000 (CN); LI, Wei, Changsha, Hunan 410000 (CN); HAN, Shuo, Changsha, Hunan 410000 (CN); LI, Shoukui, Changsha, Hunan 410000 (CN)
(74) Representative: Loyer & Abello
(86) International application number: PCT/CN2022/121663
(87) International publication number: WO 2024/021287

(56) References cited:
- CN-A- 105 161 679
- CN-A- 107 123 792
- CN-A- 110 817 977
- CN-A- 112 624 213
- CN-A- 112 768 685
- CN-A- 114 436 342
- JP-A- 2001 143 707
- US-A1- 2020 058 937

## Description

### CROSS-REFERENCE TO RELATED APPLICATION

The present invention claims priority to Chinese patent application No. 202210910328.1 filed with the China National Intellectual Property Administration on July 29, 2022, and entitled "POSITIVE ELECTRODE MATERIAL PRECURSOR, PREPARATION METHOD THEREFOR, POSITIVE ELECTRODE MATERIAL, AND LITHIUM ION BATTERY".

### TECHNICAL FIELD

The present invention relates to the technical field of new energy, and particularly relates to a positive electrode material precursor and preparation method therefor, a positive electrode material, a lithium ion battery positive electrode, a lithium ion battery, and an electrical device.

### BACKGROUND ART

With the development of energy storage technology, a threshold requirement and cost requirement of energy density per unit volume of lithium material are rapidly increased. In this background, ternary materials also gradually develop to high nickel. The high nickel ternary material has cost and capacity advantages, but the high nickel material has problems of poorer cycling performance and serious performance degradation.

It has been proved that the phase change of high nickel ternary material during the charge/discharge process will lead to a volume change of positive electrode material crystal and produce anisotropic stress, which is easy to produce primary cracks within and between the crystals and leads to vicious cycles to diffuse the cracks, so as to lead to more side reactions, which finally leads to a structural collapse and breaking of the whole positive electrode material, such that the battery performance is seriously degraded.

The ternary positive electrode material is a highly customized standard product, and a ternary precursor is a critical raw material for producing the ternary positive electrode material. The characteristics of the ternary precursor directly determine main physical and chemical properties of the ternary positive electrode material, such as particle size, elemental ratio, impurity content, thus affecting core electrochemical properties of the lithium battery, such as consistency, rate performance, energy density, cycle life.

The high nickel ternary precursors on the market at present are mostly radial agglomerated secondary spherical particles. This structure has a larger initial capacity, but the compression resistance is poor; the compaction density is low; the stability degree (structural thermal stability) of the particle after being sintered is low; and the energy density and cycling performance of the final product are poor, which restricts the application of the material with this morphology on the high-energy-density lithium ion

US2020058937 discloses nickel based hydroxide precursors with a core shell structure whereby the shell comprises primary particles being radially arranged.

### SUMMARY

The object of the present invention is to provide a positive electrode material precursor, which aims at solving the problems of poorer energy density and lower cycling performance of the prior high nickel ternary material.

In order to realize the above object, the present invention provides a positive electrode material precursor, wherein a chemical formula of the positive electrode material precursor is NiₓCo_{y}Mn_{z}(OH)₂, wherein 0.7≤x<1, 0<y<0.3, 0<z<0.3, x+y+z=1.

The structure of the positive electrode material precursor includes: an inner layer and an outer layer, wherein the positive electrode material precursor includes secondary particles each composed of primary particles, and is of a composite structure, wherein
the primary particles of the inner layer are arranged radially along a center of the positive electrode material precursor; and
the outer layer wraps the inner layer; and the primary particles of the outer layer are stacked outside the inner layer in layers.

Preferably, a line R₁ connecting a center point of one end of the primary particles of the inner layer close to a geometric center of the secondary particle with a center point of one end of the primary particles of the inner layer away from the geometric center of the secondary particle is a growth direction of the primary particles of the inner layer; and a line R₂ connecting center points of two ends of the primary particles of the outer layer inclined relative to an outer circle tangent plane of the secondary particle is taken as a growth direction, so that an angle between the growth direction R₁ of the primary particle of the inner layer and R is θ₁, and the θ₁ is 0±30°; and an angle between the growth direction R₂ of the primary particle of the outer layer and R is θ₂, and the θ₂ is 90±30°, wherein R is a line connecting a geometric center of the primary particle with the geometric center of the secondary particle of the positive electrode material precursor.

Preferably, a ratio of an inner layer average thickness to a secondary particle average diameter of the positive electrode material precursor is 40% ~ 55%; and a ratio of an outer layer average thickness to a secondary particle average diameter of the positive electrode material precursor is 45% ~ 60%.

Preferably, a 101 facet half peak width of the positive electrode material precursor in a XRD pattern is ≤ 0.300°, and a 001 facet half peak width is≤ 0.300°.

Preferably, the secondary particle average diameter of the positive electrode material precursor is 8µm ~ 14µm.

Preferably, the secondary particle average diameter of the positive electrode material precursor is 8µm ~ 11µm.

The present invention further provides a chemical formula of the positive electrode material precursor is: NiₓCo_{y}Mn_{z}(OH)₂, wherein 0. 7 ≤ x < 1, 0 < y < 0. 3, 0 < z < 0. 3, x + y + z = 1, wherein the preparation method includes:
preparing a metal salt solution according to a ratio of each metal element in the positive electrode material precursor;
passing the metal salt solution, a precipitant, and a complexing agent into a reactor with a first base liquid for a first coprecipitation reaction; and adjusting pH, a complexing agent concentration, and a nickel concentration in a supernatant solution until obtaining an inner layer metal hydroxide precipitation satisfying a requirement of the inner layer average thickness of the positive electrode material precursor; and
adding the above metal salt solution, the precipitant, the complexing agent, and the above inner layer metal hydroxide precipitation into a reactor and mixing them well, and taking a resultant as a second base liquid for a second coprecipitation reaction; adjusting pH, the complexing agent concentration, and the nickel concentration in the supernatant solution until obtaining a reaction precipitation slurry satisfying a requirement of a secondary particle size of the positive electrode material precursor; and washing and drying the reaction precipitation slurry to obtain the positive electrode material precursor.

Preferably, the nickel concentration in the supernatant solution of the first coprecipitation reaction process is controlled in a range of 250-500 ppm; and the nickel concentration in the supernatant solution of the second coprecipitation reaction process is controlled in a range of 50-200 ppm.

Preferably, the complexing agent concentration in the first coprecipitation reaction process is controlled in a range of 3-15g/L; and the complexing agent concentration of the second coprecipitation reaction process is controlled in a range of 5-20g/L.

Preferably, the pH of the first coprecipitation reaction process and the pH of the second coprecipitation reaction process are controlled by the precipitant, wherein the pH of the first coprecipitation reaction process is controlled within a range of 10.00-12.00, and the pH of the second coprecipitation reaction process is controlled within a range of 10.50-12.50.

Preferably, reaction temperatures of the first coprecipitation reaction process and the second coprecipitation reaction process are both 45-75°C.

The present invention further provides a positive electrode material, wherein its raw material includes the foregoing positive electrode material precursor.

The present invention further provides a lithium ion battery positive electrode, wherein its raw material includes the foregoing positive electrode material.

The present invention further provides a lithium ion battery including the foregoing lithium ion battery positive electrode.

The present invention further provides an electrical device including the foregoing lithium ion battery.

Compared with the prior art, the present invention includes the following beneficial effects.

The positive electrode material precursor provided by the present invention includes secondary particles each composed of the primary particles, which is of the composite structure, including the inner layer arranged radially along the center of the positive electrode material precursor and the outer layer which wraps the inner layer and is arranged in layers that is flat stacked by flaky primary particles, wherein the layers of the outer layer are perpendicular to a pressure direction during the compaction process, so that a mechanical strength of the secondary particle of the precursor of the present invention is higher than that of the common secondary particle in a radial structure or block structure. The positive electrode material inheriting this structure can obtain a compaction density higher than that of common secondary particle products, and the material energy density is significantly increased. The layer directions of the inner layer and outer layer of the secondary particle of the precursor of the present invention are different, and the sintered positive electrode material inherits this feature structure, so the material expands and contracts in different directions during the charge/discharge cycles, which avoids or reduces the particle structure collapse resulting from producing the cracks, thus improving the cycling performance.

Compared with other precursor structures, this positive electrode material precursor has higher crystallinity, which reduces the presence of dislocations and vacancies of the material itself. The highly ordered layers are stacked to reduce the stress anisotropy, which can effectively inhibit cracking during the charge/discharge process compared with other materials, thus further improving the cycling performance of the positive electrode material.

### BRIEF DESCRIPTION OF DRAWINGS

In order to more clearly illustrate the technical solutions of the embodiments of the present invention, the drawings to be used in the embodiments will be briefly introduced below. It should be understood that the following drawings illustrate only certain embodiments of the present invention, and therefore should not be regarded as a limitation of the scope of the present invention.
FIG. 1 shows a sectional structure schematic diagram of a positive electrode material precursor of the present invention;
FIG. 2 shows a definition diagram of a growth direction of a primary particle of a positive electrode material precursor of the present invention;
FIG. 3 shows a scanning electron microscope (SEM) diagram of a positive electrode material precursor obtained by Example 1;
FIG. 4 shows a sectional schematic diagram of a positive electrode material precursor obtained by Example 1;
FIG. 5 shows a XRD diagram of a positive electrode material precursor obtained by Example 1;
FIG. 6 shows a SEM diagram of a positive electrode material precursor obtained by Comparative Example 1;
FIG. 7 shows a SEM diagram of a positive electrode material precursor obtained by Comparative Example 2;
FIG. 8 shows a SEM diagram of a positive electrode material precursor obtained by Comparative Example 3; and
FIG. 9 shows a SEM diagram of a positive electrode material precursor obtained by Comparative Example 4.

### DETAILED DESCRIPTION OF EMBODIMENTS

The present invention provides a positive electrode material precursor, wherein the precursor is a high nickel ternary precursor, and a chemical formula of the positive electrode material precursor is NiₓCo_{y}Mn_{z}(OH)₂, wherein 0. 7 ≤ x < 1, 0 < y < 0. 3, 0 < z < 0. 3, x + y + z = 1. The positive electrode material precursor includes secondary particles each composed of primary particles, and is of a composite structure. The common high nickel precursor has a higher capacity, but a poorer cycling performance. However, adopting the high nickel precursor structure of the present invention can improve the cycling performance by the composite structure. The high nickel precursor can further be doped with metal elements, and the metal elements are mainly used to improve the precursor performance. For example, the addition of magnesium or zirconium can improve the cycling performance of the material; the addition of aluminum can improve the rate performance of the material; and the addition of titanium can improve the electronic conductivity of the material.

The positive electrode material precursor is a critical material for producing the positive electrode material, wherein the positive electrode material precursor is mixed and sintered with a lithium source to produce the positive electrode material. The core physical and chemical performance of the positive electrode material are directly determined by the positive electrode material precursor, and the performance of positive electrode material has a good inheritance relationship with the precursor. The specific manifestation is as follows. 1) The precursor impurity will be brought into the positive electrode material, which affects an impurity content of the positive electrode; 2) a particle size, and particle size distribution of the precursor directly determine a particle size and particle size distribution of the positive electrode material; 3) a specific surface area, and morphology of the precursor directly determine a specific surface area and morphology of the positive electrode material; and 4) an elemental ratio of the precursor directly determines an elemental ratio of the positive electrode material, etc.

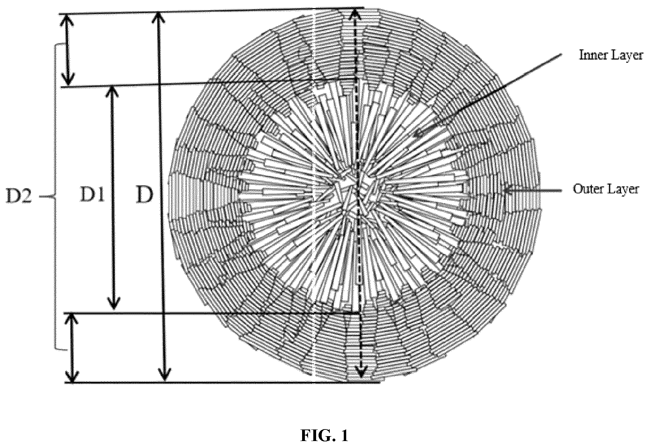

Referring to FIG. 1, the structure of the positive electrode material precursor includes an inner layer and an outer layer wrapping the inner layer, wherein primary particles of the inner layer are arranged radially along a center of the positive electrode material precursor, and primary particles of the outer layer are stacked outside the inner layer in layers.

The positive electrode material precursor provided by the present invention is of a composite structure, including the inner layer arranged radially along the center of the positive electrode material precursor and the outer layer stacked in layers outside the inner layer and wrapping the inner layer. The primary particles are laid at the outer layer to form a layer structure, which is perpendicular to a pressure direction during the compaction process, so that a mechanical strength of the whole secondary particle is higher than that of the common secondary particle in a radial structure or block structure. The positive electrode material inheriting this structure can have a compaction density higher than that of the other secondary particle product, and the material energy density is significantly increased. The layer directions of the inner layer and outer layer are different, and the sintered positive electrode material inherits this feature structure, so the material expands and contracts in different directions during the charge/discharge cycles, which avoids or reduces the particle structure from collapsing resulting from producing the cracks, thus further improving the cycling performance.

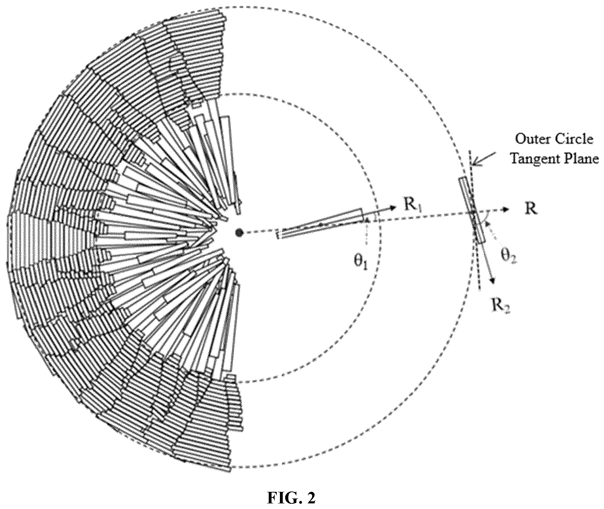

In a preferred embodiment, referring to FIG. 2, R in FIG. 2 is defined as a line connecting the geometric center of the secondary particle of the positive electrode material precursor with the geometric center of the primary particle of the positive electrode material precursor. The primary particles include the primary particles of the inner layer or outer layer, and each primary particle has R, wherein R shown in FIG. 2 is the case where R of the primary particles of the inner layer is in the same line as R of the primary particles of the outer layer. It can be understood that R is not limited to the case in FIG. 2, and R of the primary particles of the inner layer at any position and R of the primary particles of the outer layer at any position can be obtained according to the above definition.

A line R₁ connecting a center point of one end of the primary particles of the inner layer close to the geometric center of the secondary particle with a center point of one end of the primary particles of the inner layer away from the geometric center of the secondary particle indicates a growth direction of the primary particles of the inner layer, and an angle between the growth direction R₁ of the primary particle of the inner layer and R is θ₁, wherein its range is: 0 ± 30°, and θ₁ may be, for example, -30°, -25°, -20°, -16°, -15°, -12°, -10°, -5°, -3°, 0°, 2°, 5°, 6°, 8°, 10°, 13°, 15°, 17°, 20°, 21°, 23°, 25°, 26°, 28°, or 30°.

A line R₂ connecting center points of two ends of the primary particles of the outer layer inclined relative to an outer circle tangent plane of the secondary particle is a growth direction. The geometric center of any one of the primary particles of the outer layer is one point, which can obtain one outer circle tangent plane for the secondary particle at this point. Taking the outer circle tangent plane as a reference, a line connecting the center points of the inclined two ends of the flaky primary particles of the outer layer is R₂. An angle between the growth direction R₂ of the primary particle of the outer layer and R is θ₂, and its range is 90 ± 30°, and θ₂ may be, for example, 60°, 62°, 65°, 70°, 74°, 75°, 77°, 79°, 80°, 85°, 86°, 90°, 92°, 95°, 96°, 98°, 100°, 102°, 104°, 106°, 107°, 109°, 110°, 111°, 113°, 115°, 116°, 118°, or 120 °. The growth directions of the inner-layer and outer-layer primary particles determine the structure of the positive electrode material precursor.

In a preferred embodiment, referring to FIG. 1, a ratio of the inner layer average thickness D1 to the secondary particle average diameter D of the positive electrode material precursor is 40% ~ 55%, for example, it may be 40% ~ 50%, or 45% ~ 55%, and more specifically it may be 40%, 41%, 42%, 43%, 45%, 46%, 47%, 48%, 49%, 50%, 51%, 52%, 53%, or 55%; and a ratio of the outer layer average thickness D2 to the secondary particle average diameter D of the positive electrode material precursor is 45% ~ 60%, for example, it may be 45% ~ 55%, or 50% ~ 60%, and more specifically it may be 45%, 46%, 47%, 48%, 49%, 50%, 51%, 52%, 53%, 55%, 56%, 57%, 58%, or 60 %. The sum of the inner layer average thickness D1 and the outer layer average thickness D2 is the secondary particle average diameter D of the positive electrode material precursor; the inner layer average thickness D1 is the diameter length of the inner layer; and secondary particle average diameter D of the positive electrode material precursor is the average diameter length of the precursor secondary particle.

The inner layer is radial and the inner layer mainly plays a role of increasing capacity, and the outer layer is stacked in layers to resist compression. Too high a ratio of the inner layer is not beneficial to improve the compressive strength; and too high a ratio of the outer layer is not beneficial to improve the capacity.

Preferably, a 101 facet half peak width of the positive electrode material precursor in the XRD pattern is ≤ 0.300°, for example, the 101 facet half peak width may be less than 0.300°, or less than 0.290°, or less than 0.280°, or less than 0.270°, or less than 0.260°, or less than 0.250°, or less than 0.240°, or less than 0.230°, or less than 0.220°; and a 001 facet half peak width of the positive electrode material precursor in the XRD pattern is≤ 0.300°, for example, the 001 facet half peak width may be less than 0.300°, or less than 0.290°, or less than 0.280°, or less than 0.270°, or less than 0.260°, or less than 0.250°, or less than 0.240°, or less than 0.230°, or less than 0.220°.

Compared with other precursor structures, this positive electrode material precursor has higher crystallinity, which reduces the presence of dislocations and vacancies of the material itself. The highly ordered layers are stacked to reduce the stress anisotropy, which can effectively inhibit cracking during the charge/discharge process compared with other materials, thus further improving the cycling performance of the positive electrode material.

Specifically, the secondary particle average diameter of the positive electrode material precursor ranges from 8µm ~ 14µm, and the positive electrode material precursor is of a large particle. Preferably, the secondary particle average diameter of the positive electrode material precursor ranges from 8µm ~ 11µm.

The present invention further provides a preparation method of positive electrode material precursor, wherein the chemical formula of the positive electrode material precursor is NiₓCo_{y}Mn_{z}(OH)₂, wherein 0. 7 ≤ x < 1, 0 < y < 0. 3, 0 < z < 0. 3, x + y + z = 1. The preparation method includes the following steps.

Preparing a metal salt solution according to a ratio of each metal element in the positive electrode material precursor.

Specifically, a molar ratio of three metals of nickel, cobalt, and manganese is obtained according to the chemical formula of the positive electrode material precursor; and solutions of a certain concentration of Ni salt, Co salt, and Mn salt are separately prepared and mixed in a certain ratio to obtain the metal salt solution, wherein the overall metal content of the metal salt solution is 1~2.5mol/L. If doped elements exist, the doped elements are prepared in the form of metal salts along with Ni salt, Co salt, and Mn salt.

Passing the metal salt solution, a precipitant, and a complexing agent into a reactor with a first base liquid for a first coprecipitation reaction; and adjusting pH, a complexing agent concentration, and a nickel concentration in a supernatant solution until obtaining an inner layer metal hydroxide precipitation satisfying a requirement of the inner layer average thickness of the positive electrode material precursor.

Specifically, for example, the precipitant may be a NaOH solution, and the complexing agent may be ammonia (liquid). More specifically, a mass concentration of the NaOH solution is 20% ~40%, and a mass concentration of the ammonia (liquid) is 10% ~ 30 %. Specifically, the first base liquid is obtained by mixing the pure water, NaOH solution, and ammonia (liquid). The first coprecipitation reaction controls the growth direction of the primary particles of the inner layer and the ratio of the inner layer average thickness.

Adding the metal salt solution, the precipitant, the complexing agent, and the above inner layer metal hydroxide precipitation into the reactor and mixing them well, and taking a resultant as a second base liquid for a second coprecipitation reaction; adjusting reaction pH, the complexing agent concentration, and the nickel concentration in the supernatant solution to obtain a reaction precipitation slurry satisfying the requirement of the secondary particle average diameter of the positive electrode material precursor; and washing and drying the reaction precipitation slurry to obtain the positive electrode material precursor.

Specifically, for example, the precipitant may be a NaOH solution, and the complexing agent may be ammonia (liquid). More specifically, the mass concentration of the NaOH solution is 20% ~ 40%, and the mass concentration of the ammonia (liquid) is 10% ~ 30 %. The second coprecipitation reaction controls the growth direction of the primary particles of the outer layer and the ratio of the outer layer average thickness.

In a preferred embodiment, the nickel concentration in the supernatant in the first coprecipitation reaction process is controlled within a range of 250-500 ppm, which may be, for example, 250-350 ppm, or 300-400 ppm, or 350-500 ppm, and more specifically it may be (250, 253, 255, 258, 260, 261, 263, 265, 266, 267, 268, 270, 275, 280, 290, 300, 310, 320, 330, 340, 350, 360, 370, 380, 390, 400, 410, 420, 430, 440, 450, 460, 470, 480, 490, or 500) ppm; and the nickel concentration in the supernatant in the second coprecipitation reaction process is controlled within a range of 50-200 ppm, which may be, for example,70-150 ppm, or 100-200 ppm, or 50-100 ppm, and more specifically it may be (50, 55, 60, 65, 70, 75, 80, 85, 90, 95, 100, 105, 110, 115, 120, 125, 130, 135, 140, 145, 150, 155, 160, 165, 170, 175, 180, 185, 190, 195, or 200) ppm.

In a preferred embodiment, the complexing agent concentration in the first coprecipitation reaction process is controlled within a range of 3-15 g/L, for example, it may be 3-10 g/L, or 5-15 g/L, or 5-10 g/L, and more specifically it may be (3, 4, 5, 6, 7, 8, 9, 10, 11, 12, 13, 14, or 15)g/L; and the complexing agent concentration in the second coprecipitation reaction process is controlled within a range of 5-20 g/L, for example, it may be 5-10 g/L, or 10-20 g/L, or 5-15 g/L, or more specifically it may be (5, 6, 7, 8, 9, 10, 11, 12, 13, 14, 15, 16, 17, 18, 19, or 20)g/L.

In a preferred embodiment, pH of the first coprecipitation reaction process is controlled within a range of 10.00-12.00, wherein the pH of the first coprecipitation reaction may be, for example, 10.0, 10.1, 10.3, 10.5, 10.8, 11.0, 11.1, 11.2, 11.3, 11.4, 11.5, 11.6, 11.7, 11.8, 11.9, or 12.0; and pH of the second coprecipitation reaction process is controlled within a range of 10.50-12.50, wherein the pH of the second coprecipitation reaction may be, for example, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, or 12.5.

In a preferred embodiment, the reaction temperatures of the first coprecipitation reaction process and the second coprecipitation reaction process are both 45-75 °C, which may be, for example, 45-55 °C, or 50-70 °C, or 55-75 °C, and more specifically may be (45, 46, 47, 48, 49, 50, 51, 52, 53, 54, 55, 56, 57, 58, 59, 60, 61, 62, 63, 64, 65, 66, 67, 68, 69, 70, 71, 72, 73, 74, or 75) °C.

The present invention further provides a positive electrode material, wherein the raw material includes the foregoing positive electrode material precursor. The foregoing positive electrode material precursor is sintered with the lithium source to obtain the positive electrode material, wherein the structure and performance of the positive electrode material inherit the structure and performance of the positive electrode material precursor.

The present invention further provides a lithium ion battery positive electrode, wherein the raw material includes the foregoing positive electrode material.

The present invention further provides a lithium ion battery including the foregoing lithium ion battery positive electrode.

The present invention further provides an electrical device including the foregoing lithium ion battery.

The embodiments of the present invention will be described in detail below in connection with specific examples, but it will be understood by those skilled in the art that the following examples are intended to be illustrative only, and should not be regarded as a limitation of the scope of the present invention. Where the specific conditions are not indicated in examples, they shall be carried out in accordance with conventional conditions or those recommended by the manufacturer. The reagents or instruments used without indication of the manufacturer are conventional products that can be purchased commercially.

### Example 1

### Step 1:

The crystals of nickel sulfate, cobalt sulfate, and manganese sulfate were calculated and weighted according to the metal molar ratio of the nickel, cobalt, and manganese of 95: 4: 1 to prepare a homogeneously mixed ternary metal salt solution at an overall metal content of 2 mol/L.

### Step 2:

A certain amount of pure water, the NaOH solution (the concentration was 32wt%), and the ammonia (liquid) (the concentration was 21wt%) were added to the reactor, and stirred well at a constant temperature of 55°C, so as to obtain the first base liquid with pH of 11.80-11.90.

Under the stirring, a constant temperature of 55°C, and the protection of nitrogen, the metal salt solution (flow rate: 500L/h), the NaOH solution (flow rate: 180L/h), and the ammonia (liquid) (flow rate: 23L/h) were passed into the reactor with the first base liquid. The mother liquor was discharged by a concentration device in a reaction process, wherein the liquid discharge rate was consistent with the total feed amount.

During the reaction process, pH was controlled in the range of 11.90-10.80 by finely adjusting the flow of the NaOH solution and the ammonia (liquid), and the ammonia concentration fluctuated in the range of 4-12 g/L. The nickel concentration in the supernatant solution of the reaction system was changed and maintained to fluctuate in the range of 250-350 ppm, which led to the radial growth of primary particles, so as to obtain an inner layer metal hydroxide with an average thickness of 6µm.

### Step 3:

The inner layer metal hydroxide obtained in step 2 was put into the reactor, and a certain amount of pure water, the NaOH solution (the concentration was 32wt%), and the ammonia (liquid) (the concentration was 21wt%) were also added to the reactor. They were stirred uniformly at the constant temperature of 55°C, so as to obtain the second base liquid with pH of 11.10-11. 00.

Under the stirring, the constant temperature of 55°C, and the protection of the nitrogen, the metal salt solution (flow rate: 500L/h), the NaOH solution (flow rate: 180L/h), and the ammonia (liquid) (flow rate: 23L/h) were passed into the reactor with the second base liquid. The mother liquor was discharged by the concentration device in the reaction process, wherein the liquid discharge rate was consistent with the total feed amount.

During the reaction process, pH was controlled to fluctuate in the range of 11.10-10.50 by finely adjusting the flow of the NaOH solution and the ammonia (liquid), and the ammonia concentration fluctuated in the range of 6-13 g/L. The nickel concentration in the supernatant solution of the reaction system was changed and maintained to fluctuate in the range of 70-150 ppm, which led to a transverse layered stacking of the primary particles of the outer layer, so as to obtain a metal hydroxide reaction precipitation slurry with an average diameter of 11.5µm.

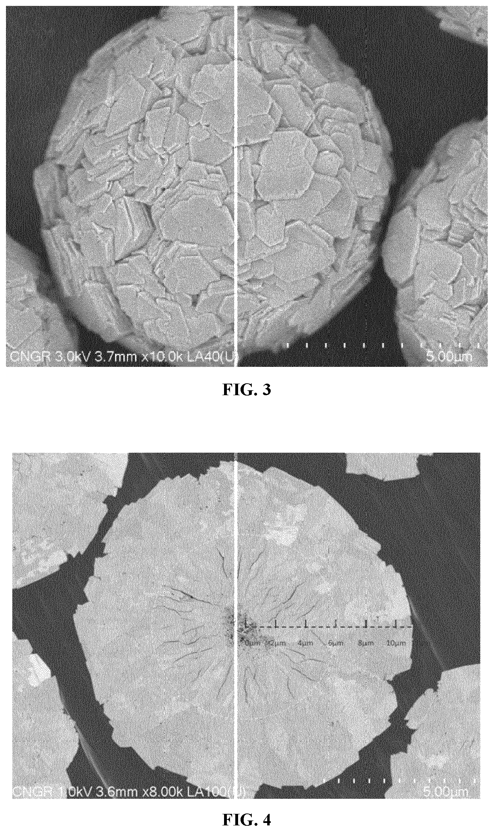

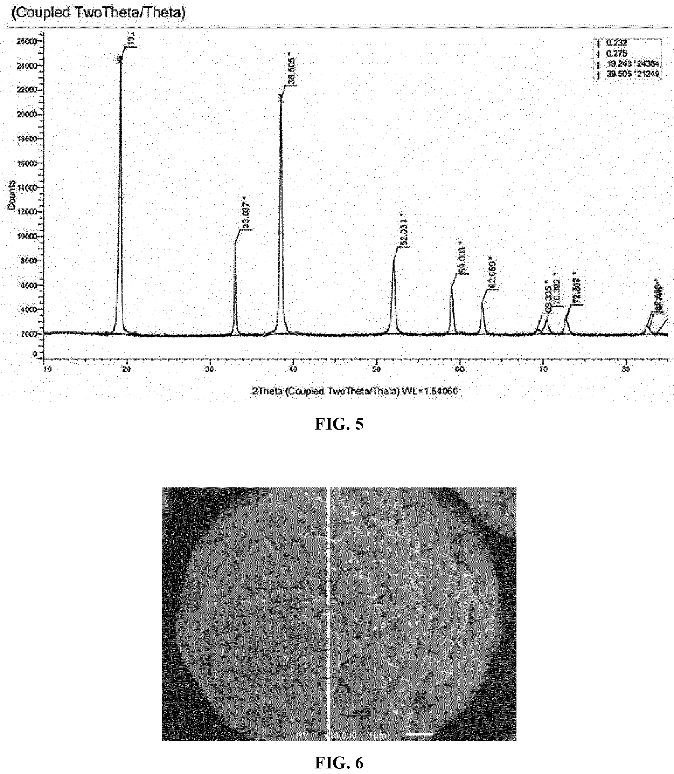

After the reaction precipitation slurry was washed, centrifuged, dried, sieved and demagnetized, the composite structure material Ni_{0.95}Co_{0.04}Mn_{0.01}(OH)₂ was obtained. The morphology result under scanning electron microscope is shown in FIG. 3, and the sectional diagram is shown in FIG. 4. The structure is that the inner layer is primary particle growing radially and the outer layer is the primary particle layer stacked in layers, wherein FWHM (001) = 0.232°, and FWHM (101) = 0.275°, and referring to FIG. 5, it indicates that the precursor structure has higher crystallinity.

### Example 2

Step 1: It was the same as Example 1 and will not be repeated herein.

### Step 2:

A certain amount of pure water, the NaOH solution (the concentration was 32wt%), and the ammonia (liquid) (the concentration was 21wt%) were added to the reactor, and stirred well at the constant temperature of 55°C, so as to obtain the first base liquid with pH of 11.80-11. 90.

Under the stirring, the constant temperature of 55°C, and the protection of the nitrogen, the metal salt solution (flow rate: 500L/h), the NaOH solution (flow rate: 180L/h), and the ammonia (liquid) (flow rate: 23L/h) were passed into the reactor having the first base liquid. The mother liquor was discharged by the concentration device in the reaction process, wherein the liquid discharge rate was consistent with the total feed amount.

During the reaction process, pH was controlled within the range of 11.90-10.80 by finely adjusting the flow of the NaOH solution and the ammonia (liquid), and the ammonia concentration fluctuated in the range of 4-12 g/L. The nickel concentration in the supernatant solution of the reaction system was changed and maintained in the range of 250-350 ppm, which led to the radial growth of primary particles, so as to obtain the inner layer metal hydroxide with an average thickness of 7.3µm.

### Step 3:

The inner layer metal hydroxide obtained in step 2 was put into the reactor, and a certain amount of pure water, the NaOH solution (the concentration was 32wt%), and the ammonia (liquid) (the concentration was 21wt%) were also added to the reactor, and stirred well at the constant temperature of 55°C, so as to obtain the second base liquid with pH of 11.10-11.00.

Under the stirring, the constant temperature of 55°C, and the protection of the nitrogen, the metal salt solution (flow rate: 500L/h), the NaOH solution (flow rate: 180L/h), and the ammonia (liquid) (flow rate: 23L/h) were passed into the reactor having the second base liquid. The mother liquor was discharged by concentration device in the reaction process, wherein the liquid discharge rate was consistent with the total feed amount.

During the reaction process, pH was controlled to fluctuate in the range of 11.10-10.50 by finely adjusting the flow of the NaOH solution and the ammonia (liquid), and the ammonia concentration fluctuated in the range of 6-13 g/L. The nickel concentration in the supernatant solution of the reaction system was changed and maintained to fluctuate in the range of 70-150 ppm, which led to the transverse layered stacking of the primary particles of the outer layer, so as to obtain a metal hydroxide reaction precipitation slurry with an average diameter of 14µm.

After the reaction precipitation slurry was washed, centrifuged, dried, sieved and demagnetized, the composite structure material Ni_{0.95}Co_{0.04}Mn_{0.01}(OH)₂ was obtained. The structure is that the inner layer is primary particle growing radially and the outer layer is the primary particle layer stacked in layers, wherein FWHM (001) = 0.229°, and FWHM (101) = 0.287°. The inner layer average thickness and the whole average diameter of the final sample are larger compared to Example 1, and the ratio of the inner layer average thickness and the whole average particle diameter is unchanged.

### Example 3

Step 1: It was the same as Example 1 and will not be repeated herein.

### Step 2:

A certain amount of pure water, the NaOH solution (the concentration was 32wt%), and the ammonia (liquid) (the concentration was 21wt%) were added to the reactor, and stirred well at the constant temperature of 55°C, so as to obtain the first base liquid with pH of 11.80-11.90.

Under the stirring, the constant temperature of 55°C, and the protection of the nitrogen, the metal salt solution (flow rate: 500L/h), the NaOH solution (flow rate: 180L/h), and the ammonia (liquid) (flow rate: 23L/h) were passed into the reactor having the first base liquid. The mother liquor was discharged by concentration device in the reaction process, wherein the liquid discharge rate was consistent with the total feed amount.

During the reaction process, pH was controlled within the range of 11.90-10.80 by finely adjusting the flow of the NaOH solution and the ammonia (liquid), and the ammonia concentration fluctuated in the range of 4-12 g/L. The nickel concentration in the supernatant solution of the reaction system was changed and maintained in the range of 250-350 ppm, which led to the radial growth of primary particles, so as to obtain the inner layer metal hydroxide with an average thickness of 4.2µm.

### Step 3:

The inner layer metal hydroxide obtained in step 2 was put into the reactor, and a certain amount of pure water, the NaOH solution (the concentration was 32wt%), and the ammonia (liquid) (the concentration was 21wt%) were also added to the reactor, and stirred well at the constant temperature of 55°C, so as to obtain the second base liquid with pH of 11.10-11.00.

Under the stirring, the constant temperature of 55°C, and the protection of the nitrogen, the metal salt solution (flow rate: 500L/h), the NaOH solution (flow rate: 180L/h), and the ammonia (liquid) (flow rate: 23L/h) were passed into the reactor having the second base liquid. The mother liquor was discharged by concentration device in the reaction process, wherein the liquid discharge rate was consistent with the total feed amount.

During the reaction process, pH was controlled to fluctuate in the range of 11.10-10.50 by finely adjusting the flow of the NaOH solution and the ammonia (liquid), and the ammonia concentration fluctuated in the range of 6-13 g/L. The nickel concentration in the supernatant solution of the reaction system was changed and maintained to fluctuate in the range of 70-150 ppm, which led to the transverse layered stacking of the primary particles of the outer layer, so as to obtain the metal hydroxide reaction precipitation slurry with an average diameter of 8µm.

After the reaction precipitation slurry was washed, centrifuged, dried, sieved and demagnetized, the composite structure material Ni_{0.95}Co_{0.04}Mn_{0.01}(OH)₂ was obtained. The structure is that the inner layer is primary particle growing radially and the outer layer is the primary particle layer stacked in layers, wherein FWHM (001) = 0.229°, and FWHM (101) = 0.287°. The inner layer average thickness and the whole average diameter of the final sample are smaller compared to Example 1, and the ratio of the inner layer average thickness and the whole average particle diameter is unchanged.

### Example 4

Step 1: It was the same as Example 1 and will not be repeated herein.

### Step 2:

A certain amount of pure water, the NaOH solution (the concentration was 32wt%), and the ammonia (liquid) (the concentration was 21wt%) were added to the reactor, and stirred well at the constant temperature of 55°C, so as to obtain the first base liquid with pH of 11.80-11.90.

Under the stirring, the constant temperature of 55°C, and the protection of the nitrogen, the metal salt solution (flow rate: 500L/h), the NaOH solution (flow rate: 180L/h), and the ammonia (liquid) (flow rate: 23L/h) were passed into the reactor having the first base liquid. The mother liquor was discharged by concentration device in the reaction process, wherein the liquid discharge rate was consistent with the total feed amount.

During the reaction process, pH was controlled to fluctuate in the range of 11.90-10.80 by finely adjusting the flow of the NaOH solution and the ammonia (liquid), and the ammonia concentration fluctuated in the range of 4-12 g/L. The nickel concentration in the supernatant solution of the reaction system was changed and maintained to fluctuate in the range of 250-350 ppm, which led to the radial growth of primary particles, so as to obtain the inner layer metal hydroxide with an average thickness of 4.6µm.

### Step 3:

The inner layer metal hydroxide obtained in step 2 was put into the reactor, and a certain amount of pure water, the NaOH solution (the concentration was 32wt%), and the ammonia (liquid) (the concentration was 21wt%) were also added to the reactor, and stirred well at the constant temperature of 55°C, so as to obtain the second base liquid with pH of 11.10-11.00.

Under the stirring, the constant temperature of 55°C, and the protection of the nitrogen, the metal salt solution (flow rate: 500L/h), the NaOH solution (flow rate: 180L/h), and the ammonia (liquid) (flow rate: 23L/h) were passed into the reactor having the second base liquid. The mother liquor was discharged by concentration device in the reaction process, wherein the liquid discharge rate was consistent with the total feed amount.

During the reaction process, pH was controlled to fluctuate in the range of 11.10-10.50 by finely adjusting the flow of the NaOH solution and the ammonia (liquid), and the ammonia concentration fluctuated in the range of 6-13 g/L. The nickel concentration in the supernatant solution of the reaction system was changed and maintained to fluctuate in the range of 70-150 ppm, which led to the transverse layered stacking of the primary particles of the outer layer, so as to obtain the metal hydroxide reaction precipitation slurry with an average diameter of 11.5µm.

After the reaction precipitation slurry was washed, centrifuged, dried, sieved and demagnetized, the composite structure material Ni_{0.95}Co_{0.04}Mn_{0.01}(OH)₂ was obtained. The structure is that the inner layer is the primary particle growing radially and the outer layer is the primary particle layer stacked transversely in layers, and the ratio of the inner layer average thickness and the whole average diameter are smaller compared to Example 1.

### Comparative Example 1

Unlike Example 1, by adjusting pH and the ammonia concentration in Step 3, pH was controlled to fluctuate in the range of 11.10-10.00; the ammonia concentration fluctuated in the range of 6-13g/L; and the nickel concentration in the supernatant solution fluctuated in the range of 550-600ppm, so as to obtain the material Ni_{0.95}Co_{0.04}Mn_{0.01}(OH)₂ with the average diameter of 11.5µm. The final prepared product is shown in FIG. 6, wherein it was difficult to obtain a complete layer by the primary particles of the outer layer.

### Comparative Example 2

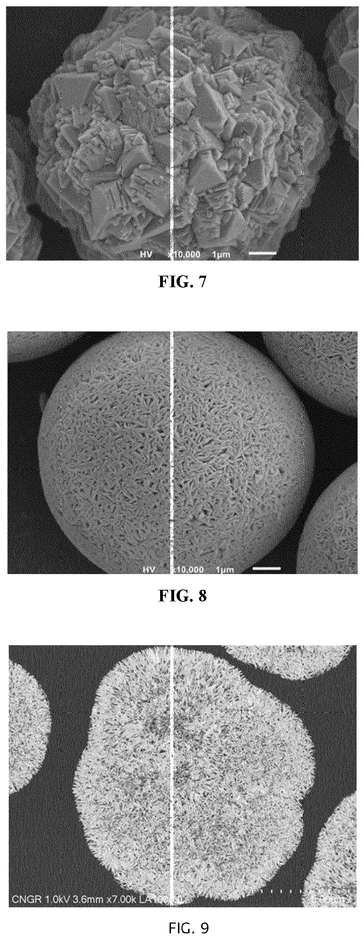

Unlike Example 1, by adjusting pH and the ammonia concentration in Step 3, pH was controlled to fluctuate in the range of 11.10-11.50; the ammonia concentration fluctuated in the range of 6-13g/L; and the nickel concentration in the supernatant solution was controlled to <30ppm, so as to obtain the material Ni_{0.95}Co_{0.04}Mn_{0.01}(OH)₂ with the average diameter of 11.5µm. The final prepared product is shown in FIG. 7, wherein the primary particles of the outer layer is blocky, and the growth directions are mostly beyond the range of θ₂.

### Comparative Example 3

Step 1: It was the same as Example 1 and will not be repeated herein.

### Step 2:

A certain amount of pure water, the NaOH solution (the concentration was 32wt%), and the ammonia (liquid) (the concentration was 21wt%) were added to the reactor, and stirred well at the constant temperature of 55°C, so as to obtain the base liquid with pH of 11.20-11.10.

Under the stirring, the constant temperature of 55°C, and the protection of the nitrogen, the metal salt solution (flow rate: 800L/h), the NaOH solution (flow rate: 288L/h), and the ammonia (liquid) (flow rate: 18L/h) were passed into the reactor having the base liquid. The mother liquor was discharged by concentration device in the reaction process, wherein the liquid discharge rate was consistent with the total feed amount.

During the reaction process, pH was controlled within the range of 11.20-10.00 by finely adjusting the flow of the NaOH solution and the ammonia (liquid), and the ammonia concentration fluctuated in the range of 3-6 g/L. The nickel concentration in the supernatant solution of the reaction system was changed and maintained to fluctuate in the range of 10-50 ppm, and the reaction duration was controlled to be 40-80h, so as to obtain the ternary precursor of the radial structure with the average diameter of 11. 5µm. The morphology result of scanning electron microscope is shown in FIG. 8, and it can be seen that the surface is porous. It has measured that FWHM(001)=0.537°, and FWHM(101)=0.668°, which indicates that the precursor structure has lower crystallinity.

### Comparative Example 4

Step 1: It was the same as Example 1 and will not be repeated herein.

### Step 2:

A certain amount of pure water, the NaOH solution (the concentration was 32wt%), and the ammonia (liquid) (the concentration was 21wt%) were added to the reactor, and stirred well at the constant temperature of 70°C, so as to obtain the base liquid with pH of 10.80-10.70.

Under the stirring, the constant temperature of 70°C, and the protection of the nitrogen, the metal salt solution (flow rate: 800L/h), the NaOH solution (flow rate: 288L/h), and the ammonia (liquid) (flow rate: 31L/h) were passed into the reactor having the base liquid. The mother liquor was discharged by concentration device in the reaction process, wherein the liquid discharge rate was consistent with the total feed amount.

During the reaction process, pH was controlled within the range of 10.80-10.00 by finely adjusting the flow of the NaOH solution and the ammonia (liquid), and the ammonia concentration fluctuated in the range of 6-10 g/L. The nickel concentration in the supernatant solution of the reaction system was changed and maintained to fluctuate in the range of 50-100 ppm, so as to obtain a disordered structural ternary precursor with an average diameter of 14µm.The SEM result of the section is shown in FIG. 9, which shows that the primary particles grow in a random direction beyond θ₁ and θ₂. The secondary particle is characterized by the disordered large ball (secondary particle) gathered by small balls (primary particles) growing in each direction. It has measured that FWHM(001)=0.623°, and FWHM(101)=0.543°, which indicates that the precursor structure has lower crystallinity.

### Comparative Example 5

Step 1: It was the same as Example 1 and will not be repeated herein.

### Step 2:

A certain amount of pure water, the NaOH solution (the concentration was 32wt%), and the ammonia (liquid) (the concentration was 21wt%) were added to the reactor, and stirred well at the constant temperature of 55°C, so as to obtain the first base liquid solution with pH of 11.80-11.90.

Under the stirring, the constant temperature of 55°C, and the protection of the nitrogen, the metal salt solution (flow rate: 500L/h), the NaOH solution (flow rate: 180L/h), and the ammonia (liquid) (flow rate: 23L/h) were passed into the reactor having the first base liquid. The mother liquor was discharged by concentration device in reaction process, wherein the liquid discharge rate was consistent with the total feed amount.

During the reaction process, pH was controlled to fluctuate in the range of 11.90-10.80 by finely adjusting the flow of the NaOH solution and the ammonia (liquid), and the ammonia concentration fluctuated in the range of 4-12 g/L. The nickel concentration in the supernatant solution of the reaction system was changed and maintained to fluctuate in the range of 250-350 ppm, which led to the radial growth of the primary particle, so as to obtain the inner layer metal hydroxide with the average thickness of 9.0µm.

### Step 3:

The inner layer metal hydroxide obtained in step 2 was put into the reactor, and a certain amount of pure water, the NaOH solution (the concentration was 32wt%), and the ammonia (liquid) (the concentration was 21wt%) were also added to the reactor, and stirred well at the constant temperature of 55°C, so as to obtain the second base liquid solution with pH of 11.10-11.00.

Under the stirring, the constant temperature 55°C, and the protection of the nitrogen, the metal salt solution (flow rate: 500L/h), the NaOH solution (flow rate: 180L/h), and the ammonia (liquid) (flow rate: 23L/h) were passed into the reactor having the second base liquid. The mother liquor was discharged by concentration device in reaction process, wherein the liquid discharge rate was consistent with the total feed amount.

During the reaction process, pH was controlled to fluctuate in the range of 11.10-10.50 by finely adjusting the flow of the NaOH solution and the ammonia (liquid), and the ammonia concentration fluctuated in the range of 6-13 g/L. The nickel concentration in the supernatant solution of the reaction system was changed and maintained to fluctuate in the range of 70-150 ppm, which led to the transverse layer stacking of the primary particles of the outer layer, so as to obtain the metal hydroxide reaction precipitation slurry with the average diameter of 11.5µm.

After the reaction precipitation slurry was washed, centrifuged, dried, sieved and magnetized, the composite structure material Ni_{0.95}Co_{0.04}Mn_{0.01}(OH)₂ was obtained. The structure is that the inner layer is the primary particle growing radially and the outer layer is the primary particle layer stacked transversely in layers, wherein the ratio of the inner layer average thickness is about 78%, and the ratio of the outer layer average thickness is about 22%.

The results of the preparation conditions and the performance parameters of the precursors in Example 1 to Example 4, and Comparative Example 1 to Comparative Example 5 are shown in Table 1. According to Table 1, it can be seen that the average diameters of the inner layer and the whole particle were adjusted on basis of the unchanged ratios of the inner layer average thickness and the outer layer average thickness in Example 2 and Example 3; the ratios of the inner layer average thickness and the outer layer average thickness were adjusted in Example 4, so as to obtain the precursor with different ratios of the inner layer average thickness and the outer layer average thickness; in Comparative Example 1, the nickel concentration of the precursor in the supernatant solution in the preparation process was too high, so that it was difficult to obtain complete layers at the outer layer of the precursor obtained; in Comparative Example 2, the nickel concentration of the precursor in the supernatant solution in the preparation process was too low, so that the precursor primary particle obtained was block structure, and the growth direction of the primary particles of the outer layer was not flat laid in layers; in Comparative Example 3, the precursor obtained by adopting the prior art was only of the radial structure without further forming an outer layer outside the inner layer; in Comparative Example 4, the precursor obtained by adopting the prior art was of the precursor structure with disordered angle and without further forming an outer layer outside the inner layer; and in Comparative Example 5, the ratios of the inner layer average thickness and the outer layer average thickness were adjusted, so that the precursor with the ratio of the inner layer average thickness to outer layer average thickness exceeding that of the present invention was obtained.

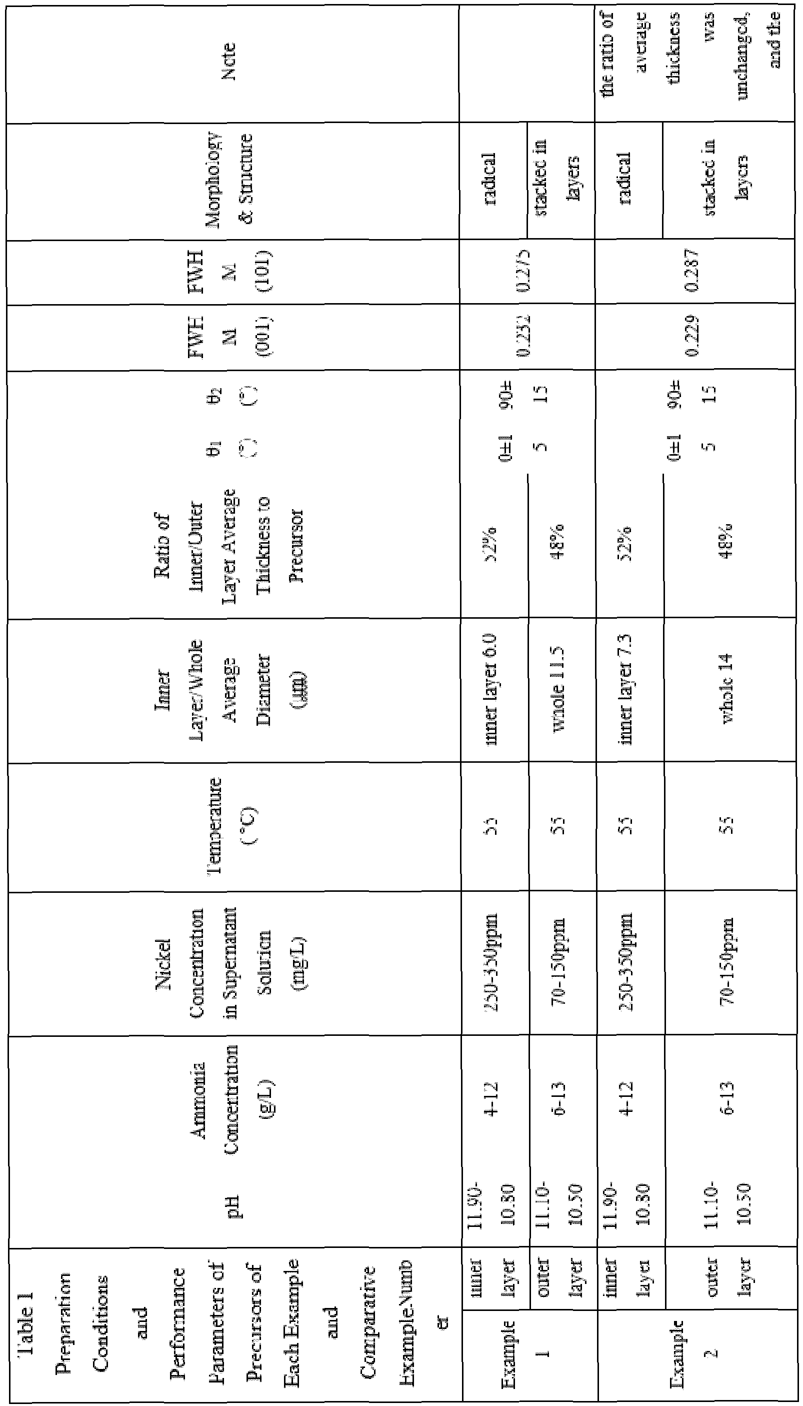

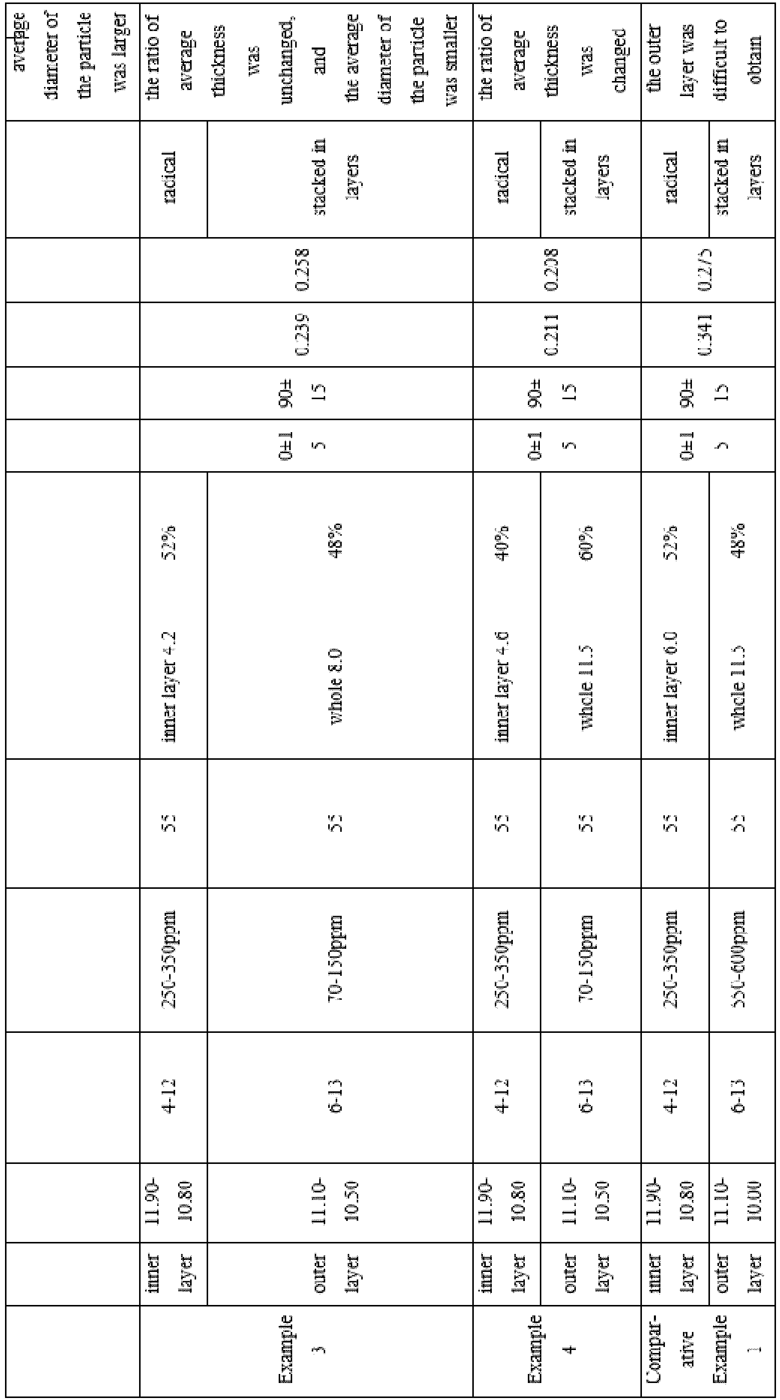

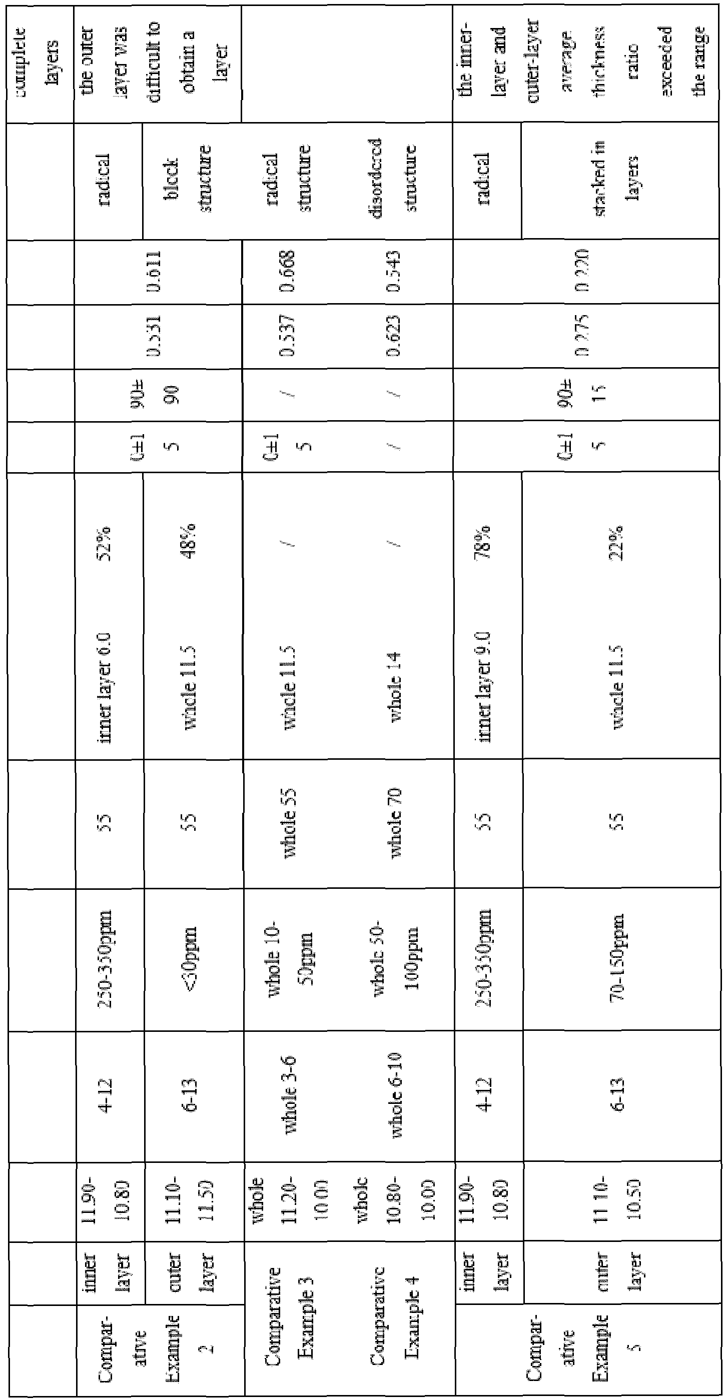

The positive electrode materials prepared by the precursors in Example 1 to Example 4, and Comparative Example 1 to Comparative Example 5, and the results of the performance parameters of the lithium ion battery prepared by these positive electrode materials are shown in Table 2. As can be seen from comparisons in Table 2, when the element ratios are the same, the battery in Example 1 of the present invention has the best performance due to its composite structure with the radical inner layer and the transverse layered stack outer layer, the reasonable average thickness ratio of the inner layer and the outer layer, and the higher crystallinity, so that it has the highest compaction density and higher capacity, which correspond to the highest volume energy density and cycling performance thereof. The whole electrochemical performance of the battery is greatly improved, which can realize the rapid charging and discharging of the battery and has a higher commercial value.

**Table 2 Performance Parameters of Lithium-ion Batteries in Each Example and Comparative Example**

| Number | Compaction Density at 2T Force (g/cm³) | Electrode Sheet Volume Energy Density at 4.3V (Wh/L) | 50-Cycle Retention Rate at 1C (%) | Discharge Capacity at 0.1C (mAh/g) |
|---|---|---|---|---|
| Example 1 | 3 | 2894.1 | 94 | 224.3 |
| Example 2 | 3 | 2883.2 | 93 | 223.4 |
| Example 3 | 2.9 | 2820.5 | 91 | 225.9 |
| Example 4 | 3 | 2871.5 | 95 | 223.1 |
| Comparative Example 1 | 2.8 | 2678.9 | 89 | 221.4 |
| Comparative Example 2 | 2.8 | 2622.8 | 86 | 217.8 |
| Comparative Example 3 | 2.8 | 2784.5 | 87 | 229.6 |
| Comparative Example 4 | 2.7 | 2680.3 | 90 | 230.6 |
| Comparative Example 5 | 2.8 | 2737.5 | 92 | 227.5 |

Finally, it should be noted that the above examples are only used to illustrate the technical solutions of the present invention, and are not intended to be a limitation. Notwithstanding the detailed description of the present invention with reference to the foregoing examples, it should be understood by those of ordinary skill in the art, it is still possible to modify the technical solutions recorded in the foregoing examples, or to change partial or all technical features therein with equivalent ones; and these modifications or changes do not take the essence of the corresponding technical solutions out of the scope of the technical solutions of the examples of the present invention.

Furthermore, those skilled in the art can understand that, although some examples herein include some features included in other examples and not others, the combinations of features in different examples are meant to be within the scope of the present invention and form different examples. For example, any one of the examples required to be protected in the above claims may be used in any combination method. The information disclosed in the background art is only intended to deepen the understanding of the overall background art of the present invention, and should not be taken to acknowledge or imply in any way that the information constitutes prior art already known to those skilled in the art.

## Claims

1. A positive electrode material precursor, **characterized in that** a chemical formula of the positive electrode material precursor is NiₓCo_{y}Mn_{z}(OH)₂, wherein 0. 7 ≤ x < 1, 0 < y < 0. 3, 0 < z < 0. 3, x + y + z = 1, wherein
a structure of the positive electrode material precursor comprises: an inner layer and an outer layer, wherein the positive electrode material precursor comprises secondary particles each composed of primary particles, and is of a composite structure, wherein
the primary particles of the inner layer are arranged radially along a center of the positive electrode material precursor; and
the outer layer wraps the inner layer, and the primary particles of the outer layer are stacked outside the inner layer in layers.

2. The positive electrode material precursor according to claim 1, wherein a line R₁ connecting a center point of one end of the primary particles of the inner layer close to a geometric center of the secondary particle with a center point of one end of the primary particles of the inner layer away from the geometric center of the secondary particle is a growth direction of the primary particles of the inner layer; and a line R₂ connecting center points of two ends of the primary particles of the outer layer inclined relative to an outer circle tangent plane of the secondary particle is taken as a growth direction, so that an angle between the growth direction R₁ of the primary particles of the inner layer and R is θ₁, and the θ₁ is 0±30°; and an angle between the growth direction R₂ of the primary particles of the outer layer and R is θ₂, and the θ₂ is 90±30°, wherein R is a line connecting a geometric center of the primary particles with the geometric center of the secondary particle of the positive electrode material precursor.

3. The positive electrode material precursor according to claim 1 or 2, wherein a ratio of an inner layer average thickness to a secondary particle average diameter of the positive electrode material precursor is 40% ~ 55%; and a ratio of an outer layer average thickness to the secondary particle average diameter of the positive electrode material precursor is 45% ~ 60%.

4. The positive electrode material precursor according to claim 3, wherein a 101 facet half peak width of the positive electrode material precursor in a XRD pattern is ≤ 0. 300°, and a 001 facet half peak width is≤ 0. 300°.

5. The positive electrode material precursor according to claim 1, wherein a secondary particle average diameter of the positive electrode material precursor is 8µm ~ 14µm; and
preferably, the secondary particle average diameter of the positive electrode material precursor is 8µm ~ 11µm.

6. A preparation method of a positive electrode material precursor, **characterized in that** a chemical formula of the positive electrode material precursor is: NiₓCo_{y}Mn_{z}(OH)₂, wherein 0. 7 ≤ x < 1, 0 < y < 0. 3, 0 < z < 0. 3, x + y + z = 1, wherein the preparation method comprises:
preparing a metal salt solution according to a ratio of each metal element in the positive electrode material precursor;
passing the metal salt solution, a precipitant, and a complexing agent into a reactor having a first base liquid for a first coprecipitation reaction; adjusting reaction pH, a complexing agent concentration, and a nickel concentration in a supernatant solution until obtaining an inner layer metal hydroxide precipitation satisfying a requirement of an inner layer average thickness of the positive electrode material precursor; and
adding the metal salt solution, the precipitant, the complexing agent, and the inner layer metal hydroxide precipitation into a reactor and mixing them well, and taking a resultant as a second base liquid for a second coprecipitation reaction; adjusting pH, a complexing agent concentration, and a nickel concentration in a supernatant solution until obtaining a reaction precipitation slurry satisfying a requirement of a secondary particle size of the positive electrode material precursor; and washing and drying the reaction precipitation slurry to obtain the positive electrode material precursor.

7. The preparation method of the positive electrode material precursor according to claim 6, wherein the nickel concentration in the supernatant solution in the first coprecipitation reaction process is 250-500 ppm; and the nickel concentration in the supernatant solution in the second coprecipitation reaction process is 50-200 ppm.

8. The preparation method of the positive electrode material precursor according to claim 6, wherein the complexing agent concentration in the first coprecipitation reaction process is controlled within a range of 3-15g/L; and the complexing agent concentration in the second coprecipitation reaction process is controlled within a range of 5-20g/L.

9. The preparation method of the positive electrode material precursor according to claim 6, wherein the pH of the first coprecipitation reaction process and the pH of the second coprecipitation reaction process are controlled by the precipitant, wherein the pH of the first coprecipitation reaction process is controlled within a range of 10.00-12.00, and the pH of the second coprecipitation reaction process is controlled within a range of 10.50-12.50.

10. The preparation method of the positive electrode material precursor according to claim 6, wherein reaction temperatures of the first coprecipitation reaction process and the second coprecipitation reaction process are both 45-75 °C.

11. A positive electrode material, **characterized in that** a raw material comprises the positive electrode material precursor according to any one of claims 1-5.

12. A lithium ion battery positive electrode, **characterized in that** a raw material comprises the positive electrode material according to claim 11.

13. A lithium ion battery, **characterized by** comprising the lithium ion battery positive electrode according to claim 12.

14. An electrical device, **characterized by** comprising the lithium ion battery according to claim 13.

## Patentansprüche

1. Ein Positivelektrodenmaterialvorläufer, **dadurch gekennzeichnet, dass** die chemische Formel
des Positivelektrodenmaterialvorläufers NiₓCo_{y}Mn_{z}(OH) ist, wobei 0.7 ≤ x < 1.0 < y < 0.3, 0 < z < 0.3, x + y + z = 1, wobei
eine Struktur des Positivelektrodenmaterialvorläufers umfasst: eine innere Schicht und eine äußere Schicht, wobei der Positivelektrodenmaterialvorläufer Sekundärpartikel umfasst, die jeweils aus Primärpartikeln bestehen, und eine Verbundstruktur aufweist, wobei
die Primärpartikel der inneren Schicht radial entlang einer Mitte des Positivelektrodenmaterialvorläufers angeordnet sind; und
die äußere Schicht die innere Schicht umhüllt und die Primärpartikel der äußeren Schicht außerhalb der inneren Schicht in Schichten gestapelt sind.

2. Der Positivelektrodenmaterialvorläufer gemäß Anspruch 1, wobei eine Linie R₁, die einen Mittelpunkt eines Endes der Primärpartikel der inneren Schicht nahe einer geometrischen Mitte des Sekundärpartikels mit einem Mittelpunkt eines Endes der Primärpartikel der inneren Schicht entfernt von der geometrischen Mitte des Sekundärpartikels verbindet, eine Wachstumsrichtung der Primärpartikel der inneren Schicht ist; und eine Linie R₂, die die Mittelpunkte der beiden Enden der Primärpartikel der äußeren Schicht verbindet, die relativ zu einer Tangentialebene des äußeren Kreises des Sekundärpartikels geneigt ist, als Wachstumsrichtung genommen wird, so dass ein Winkel zwischen der Wachstumsrichtung R₁ der Primärpartikel der inneren Schicht und R θ₁ ist, und θ₁ 0±30° beträgt; und ein Winkel zwischen der Wachstumsrichtung R₂ der Primärpartikel der äußeren Schicht und R θ₂ ist, und θ₂ 90±30° beträgt, wobei R eine Linie ist, die eine geometrischen Mitte der Primärpartikel mit der geometrischen Mitte des Sekundärpartikels des Positivelektrodenmaterialvorläufers verbindet.

3. Der Positivelektrodenmaterialvorläufer gemäß Anspruch 1 oder 2, wobei das Verhältnis der durchschnittlichen Dicke der inneren Schicht zum durchschnittlichen Durchmesser der sekundären Partikel des Positivelektrodenmaterialvorläufers 40% bis 55% ist und das Verhältnis der durchschnittlichen Dicke der äußeren Schicht zum durchschnittlichen Durchmesser des sekundären Partikels des Positivelektrodenmaterialvorläufers 45% bis 60% ist.

4. Der Positivelektrodenmaterialvorläufer gemäß Anspruch 3, wobei eine Hälfte der Peakbreite des 101-Facetten-Peaks des Positivelektrodenmaterialvorläufers in einem XRD-Muster ≤ 0.300° ist und eine Hälfte der Peakbreite des 001-Facetten-Peaks ≤ 0.300° ist.

5. Der Positivelektrodenmaterialvorläufer gemäß Anspruch 1, wobei der durchschnittliche Durchmesser des Sekundärpartikels des Positivelektrodenmaterialvorläufers 8 µm bis 14 µm ist; und
vorzugsweise der durchschnittliche Durchmesser des Sekundärpartikels des Positivelektrodenmaterialvorläufers 8 µm bis 11 µm ist.

6. Verfahren zur Herstellung eines Positivelektrodenmaterialvorläufers, **dadurch gekennzeichnet, dass** die chemische Formel des Positivelektrodenmaterialvorläufers lautet: NiₓCo_{y}Mn_{z}(OH)₂, wobei 0.7 ≤ x < 1.0 < y < 0.3, 0 < z < 0.3, x + y + z = 1, wobei das Herstellungsverfahren umfasst:
Herstellen einer Metallsalzlösung gemäß einem Verhältnis jedes Metallelements in dem Positivelektrodenmaterialvorläufer;
Überführen der Metallsalzlösung, eines Fällungsmittels und eines Komplexbildners in einen Reaktor, umfassend eine erste basische Flüssigkeit für eine erste Ko-Fällungsreaktion; Einstellen des pH-Werts der Reaktion, einer Komplexbildnerkonzentration und eine Nickelkonzentration in einer Überstandslösung, bis eine Metallhydroxidfällung der inneren Schicht erhalten wird, die eine Anforderung an die durchschnittliche Dicke der inneren Schicht des Positivelektrodenmaterialvorläufers erfüllt; und
Zugeben der Metallsalzlösung, des Fällungsmittels, des Komplexbildners und des Metallhydroxid-Niederschlags der inneren Schicht in einen Reaktor und gutes Mischen derselben und Nehmen des Mischungsergebnisses als zweite basische Flüssigkeit für eine zweite Ko-Fällungsreaktion; Einstellen des pH-Werts, der Komplexbildnerkonzentration und der Nickelkonzentration in einer Überstandslösung, bis eine Reaktionsfällungssuspension erhalten wird, die eine Anforderung an die sekundäre Partikelgröße des Positivelektrodenmaterialvorläufers erfüllt; und Waschen und Trocknen der Reaktionsfällungssuspension, um den Positivelektrodenmaterialvorläufer zu erhalten.

7. Verfahren zur Herstellung des Positivelektrodenmaterialvorläufers gemäß Anspruch 6, wobei die Nickelkonzentration in der Überstandslösung im ersten Ko-Fällungsreaktionsprozess 250 bis 500 ppm ist und die Nickelkonzentration in der Überstandslösung im zweiten Ko-Fällungsreaktionsprozess 50 bis 200 ppm ist.

8. Verfahren zur Herstellung des Positivelektrodenmaterialvorläufers gemäß Anspruch 6, wobei die Komplexbildnerkonzentration im ersten Ko-Fällungsreaktionsprozess in einem Bereich von 3 bis 15 g/l gehalten wird und die Komplexbildnerkonzentration im zweiten Ko-Fällungsreaktionsprozess in einem Bereich von 5 bis 20 g/l gehalten wird.

9. Verfahren zur Herstellung des Positivelektrodenmaterialvorläufers gemäß Anspruch 6, wobei der pH-Wert des ersten Ko-Fällungsreaktionsprozesses und der pH-Wert des zweiten Ko-Fällungsreaktionsprozesses durch das Fällungsmittel gesteuert werden, wobei der pH-Wert des ersten Ko-Fällungsreaktionsprozesses kontrolliert in einem Bereich von 10.00 bis 12.00 gehalten wird und der pH-Wert des zweiten Ko-Fällungsreaktionsprozesses kontrolliert in einem Bereich von 10.50 bis 12.50 gehalten wird.

10. Verfahren zur Herstellung des Positivelektrodenmaterialvorläufers gemäß Anspruch 6, wobei die Reaktionstemperaturen des ersten Ko-Fällungsreaktionsprozesses und des zweiten Ko-Fällungsreaktionsprozesses beide 45 bis 75 °C betragen.

11. Positivlektrodenmaterial, **dadurch gekennzeichnet, dass** ein Rohmaterial den Positivelektrodenmaterialvorläufer gemäß einem der Ansprüche 1 bis 5 umfasst.

12. Lithium-Ionen-Batterie-Positivelektrode, **dadurch gekennzeichnet, dass** ein Rohmaterial das Positivelektrodenmaterial gemäß Anspruch 11 umfasst.

13. Lithium-Ionen-Batterie, **dadurch gekennzeichnet, dass** diese die Lithium-Ionen-Batterie-Positivelektrode gemäß Anspruch 12 umfasst.

14. Elektrisches Gerät, **dadurch gekennzeichnet, dass** dieses die Lithium-Ionen-Batterie gemäß Anspruch 13 umfasst.

## Revendications

1. Précurseur de matériau d'électrode positive, **caractérisé en ce qu'**une formule chimique du précurseur de matériau d'électrode positive est NiₓCo_{y}Mn_{z}(OH)₂, dans lequel 0,7 ≤ x < 1, 0 < y < 0,3, 0 < z < 0,3, x + y +z = 1, dans lequel
une structure du précurseur de matériau d'électrode positive comprend : une couche interne et une couche externe, dans lequel le précurseur de matériau d'électrode positive comprend des particules secondaires composées chacune de particules primaires, et est d'une structure composite, dans lequel
les particules primaires de la couche interne sont agencées radialement le long d'un centre du précurseur de matériau d'électrode positive ; et
la couche externe enveloppe la couche interne, et les particules primaires de la couche externe sont empilées à l'extérieur de la couche interne en couches.

2. Précurseur de matériau d'électrode positive selon la revendication 1, dans lequel une ligne R₁ reliant un point central d'une extrémité des particules primaires de la couche interne proche d'un centre géométrique de la particule secondaire à un point central d'une extrémité des particules primaires de la couche interne éloignée du centre géométrique de la particule secondaire est une direction de croissance des particules primaires de la couche interne, et une ligne R₂ reliant des points centraux de deux extrémités des particules primaires de la couche externe inclinées par rapport à un plan tangent de cercle externe de la particule secondaire est prise comme direction de croissance, de telle sorte qu'un angle entre la direction de croissance R₁ des particules primaires de la couche interne et R est θ₁, et le θ₁ est 0±30° ; et un angle entre la direction de croissance R₂ des particules primaires de la couche externe et R est θ₂, et le θ₂ est 90±30°, dans lequel R est une ligne reliant un centre géométrique des particules primaires au centre géométrique de la particule secondaire du précurseur de matériau d'électrode positive.

3. Précurseur de matériau d'électrode positive selon la revendication 1 ou 2, dans lequel un rapport d'une épaisseur moyenne de couche interne sur un diamètre moyen de particule secondaire du précurseur de matériau d'électrode positive est 40 % - 55 % ; et un rapport d'une épaisseur moyenne de couche externe sur le diamètre moyen de particule secondaire du précurseur de matériau d'électrode positive est 45 % - 60 %.

4. Précurseur de matériau d'électrode positive selon la revendication 3, dans lequel une largeur de demi-pic de facette 101 du précurseur de matériau d'électrode positive dans un motif XRD est ≤ 0,300°, et une largeur de demi-pic de facette 101 est ≤ 0,300°.

5. Précurseur de matériau d'électrode positive selon la revendication 1, dans lequel un diamètre moyen de particule secondaire du précurseur de matériau d'électrode positive est 8 µm - 14 µm ; et
de préférence, le diamètre moyen de particule secondaire du précurseur de matériau d'électrode positive est 8 µm - 11 µm.

6. Procédé de préparation d'un précurseur de matériau d'électrode positive, **caractérisé en ce qu'**une formule chimique du précurseur de matériau d'électrode positive est : NiₓCo_{y}Mn_{z}(OH)₂, dans lequel 0,7 ≤ x < 1, 0 < y < 0,3, 0 < z < 0,3, x + y +z = 1, dans lequel le procédé de préparation consiste à :
préparer une solution de sel métallique selon un rapport de chaque élément métallique dans le précurseur de matériau d'électrode positive ;
faire passer la solution de sel métallique, un précipitant et un agent complexant dans un réacteur possédant un premier liquide de base pour une première réaction de coprécipitation ; ajuster le pH de réaction, la concentration d'agent complexant et la concentration de nickel dans une solution de surnageant jusqu'à l'obtention d'une précipitation d'hydroxyde de métal de couche interne satisfaisant une exigence d'une épaisseur moyenne de couche interne du précurseur de matériau d'électrode positive ; et
ajouter la solution de sel métallique, le précipitant, l'agent complexant et la précipitation d'hydroxyde de métal de couche interne dans un réacteur et bien les mélanger, et prendre ce qui en résulte comme second liquide de base pour une seconde réaction de coprécipitation ; ajuster le pH, une concentration d'agent complexant et une concentration de nickel dans une solution de surnageant jusqu'à obtention d'une suspension de précipitation de réaction satisfaisant une exigence d'une taille de particule secondaire du précurseur de matériau d'électrode positive ; et laver et sécher la suspension de précipitation de réaction pour obtenir le précurseur de matériau d'électrode positive.

7. Procédé de préparation du précurseur de matériau d'électrode positive selon la revendication 6, dans lequel la concentration de nickel dans la solution de surnageant dans le premier processus de réaction de coprécipitation est 250-500 ppm ; et la concentration de nickel dans la solution de surnageant dans le second processus de réaction de coprécipitation est 50-200 ppm.

8. Procédé de préparation du précurseur de matériau d'électrode positive selon la revendication 6, dans lequel la concentration d'agent complexant dans le premier processus de réaction de coprécipitation est commandée dans une plage de 3-15 g/L ; et la concentration d'agent complexant dans le second processus de réaction de coprécipitation est commandée dans une plage de 5-20 g/L.

9. Procédé de préparation du précurseur de matériau d'électrode positive selon la revendication 6, dans lequel le pH du premier processus de réaction de coprécipitation et le pH du second processus de réaction de coprécipitation sont commandés par le précipitant, dans lequel le pH du premier processus de réaction de coprécipitation est commandé dans une plage de 10,00-12,00, et le pH du second processus de réaction de coprécipitation est commandé dans une plage de 10,50-12,50.

10. Procédé de préparation du précurseur de matériau d'électrode positive selon la revendication 6, dans lequel les températures de réaction du premier processus de réaction de coprécipitation et du second processus de réaction de coprécipitation sont toutes les deux 45-75 °C.

11. Matériau d'électrode positive, **caractérisé en ce qu'**une matière première comprend le précurseur de matériau d'électrode positive selon l'une quelconque des revendications 1-5.

12. Électrode positive de batterie au lithium-ion, **caractérisée en ce qu'**une matière première comprend le matériau d'électrode positive selon la revendication 11.

13. Batterie au lithium-ion, **caractérisée en ce qu'**elle comprend l'électrode positive de batterie au lithium-ion selon la revendication 12.

14. Dispositif électrique, **caractérisé en ce qu'**il comprend la batterie au lithium-ion selon la revendication 13.
